# EUROPÄISCHE PATENTANMELDUNG

(11) **EP 1 480 020 A1**
(43) Veröffentlichungstag der Anmeldung: **24.11.2004**
(21) Anmeldenummer: 04010762.5
(22) Anmeldetag: 06.05.2004
(51) Int. Cl.: G01F 23/00, G01D 7/12

(54) **Messgerät, insbesondere zur Füllstand- oder Druckmessung mit Sprachunterstützung**

(30) Priorität: 15.05.2003 DE 10321775
(71) Anmelder: VEGA Grieshaber KG, 77709 Wolfach (DE)
(72) Erfinder: Laun, Robert, 77756 Hausach (DE)
(74) Vertreter: Göhring, Robert, Dipl.-Ing.

(57) **Zusammenfassung**

Die Erfindung betrifft ein Messgerät insbesondere zur Füllstand- und Druckmessung mit einer Steuereinrichtung (9), an die eine Speichereinheit (8), eine Eingabeeinheit (11) sowie eine Ausgabeeinheit (12) angeschlossen ist. Die Ausgabeeinheit (12) ist hierbei als akustische Ausgabeeinheit ausgebildet. Erfindungsgemäß sind in der Speichereinheit (8) Betriebsund/oder Bedienungsparameter gespeichert und durch Betätigung der Eingebeeinheit (11) als akustische Sprachsignale von der Ausgabeeinheit (12) ausgebbar.

## Beschreibung

Die Erfindung bezieht sich auf ein Messgerät, insbesondere ein Füllstand- oder Druckmessgerät gemäß dem Oberbegriff des Anspruchs 1.

Derartige Füllstandmessgeräte werden z.B..unter dem Namen VEGAFLEX Serie 60 von der Anmelderin vertrieben. Druckmesseinrichtungen derart werden von der Anmelderin unter der Bezeichnung VEGABAR vertrieben.

Füllstandmessgeräte und Druckmessgeräte, wie z.B. Druckmessgeräte, Vibrationsmessgeräte usw. benötigen für die korrekte Funktion meist einige Informationen, die durch den Anwender dem Füllstandmessgerät mitgeteilt werden müssen. Dabei kann es sich einerseits z.B. um einen Abgleich handeln, der die gemessene physikalische Größe in eine vom Anwender gewünschte Größe umrechnet (bspw. von Meter in Volumenprozent) oder zum anderen um Parameter, die dem Füllstandmessgerät mitteilen, in welchen Umgebungsbedingungen es eingesetzt wird (bspw. das Füllgut im Behälter).

Die Eingabe dieser Informationen erfolgt bislang entweder mittels eines mit geeigneter Software ausgestatteten PCs, der an das Füllstandmessgerät angeschlossen werden muss, oder den am Füllstandmessgerät befindlichen Tasten unterstützt von einem ebenfalls am Füllstandmessgerät vorhandenen Display 2. Die letztere Variante besitzt allerdings, bedingt durch die Baugröße des Messgeräts, Einschränkungen in der Größe des Displays 2, so dass man sich bei der Darstellung auf wesentliche Informationen, z.B. die einzustellenden Parameter, beschränken muss. Kontextbezogene Hilfefunktionen zu dem im Display 2 sichtbaren Menü sind auf dem selben Display 2 somit nicht darstellbar, was zur Folge hat, dass diese Informationen einer separaten, dem Messgerät beiliegenden, gedruckten Betriebsanleitung zu entnehmen sind.

Erfahrungsgemäß stellt diese Situation in der Praxis ein Problem dar, da das Vorhandensein dieser Betriebsanleitung in unmittelbarer Umgebung des Füllstandmessgerät nicht immer gewährleistet werden kann.

Die vorliegende Erfindung setzt hier an.

Ziel der Erfindung ist es, eine separate Bedienungsanleitung für die Inbetriebnahme eines Messgeräts überflüssig zu machen und dennoch dem Anwender Informationen zu den Betriebs- und Bedienungsparametern während der Parametrierung des Messgerätes zur Verfügung zu stellen.

Dieses Ziel wird erfindungsgemäß durch die im Anspruch 1 genannten Merkmale erreicht.

Über einen Lautsprecher und/oder Kopfhörer 7 erhält der Anwender eine akustische Unterstützung in Form von Sprachsignalen, die über Betriebs- bzw. Bedienungsparameter informieren, wodurch auf deren detaillierte Darstellung visueller Art sowie auf kontextbezogene Hilfefunktionen im Display 2 des Füllstandmessgeräts verzichtet werden kann. Weiterhin ist damit eine dem Messgerät beiliegende Betriebsanleitung nicht mehr zwingend erforderlich. Trotzdem ist der Anwender in der Lage, das Messgerät qualifiziert zu bedienen. Insbesondere in Situationen, in denen das Messgerät nur schwer zugänglich ist (bspw. an Silos) bietet sich der Einsatz eines erfindungsgemäßen Messgeräts an. In Situationen wie genannt muss der Anwender seiner Absicherung erhöhte Aufmerksamkeit widmen bzw. ist mit entsprechenden Gerätschaften ausgerüstet, die ihm das Mitnehmen einer Betriebsanleitung sowie das Auffinden entsprechender Passagen in Selbiger unmöglich machen.

Weiterbildungen der Erfindung sind Gegenstand der Unteransprüche.

Eine besonders vorteilhafte Ausgestaltung der Erfindung besteht darin, eine erste Sende- und Empfangseinheit 5 für die drahtlose Übertragung der akustischen Sprachsignale zur Ausgabevorrichtung 12 vorzusehen. Auf ein Kabel, z.B. zu einem Kopfhörer 7, das vom Anwender oft als störend empfunden wird, da es seine Bewegungsfreiheit zum Teil erheblich einengt, kann somit verzichtet werden.

Ein bevorzugtes Einsatzgebiet der Erfindung sind Füllstandoder Druckmessgeräte.

Die Erfindung und deren weitere zweckmäßige Ausgestaltungen werden nachfolgend im Zusammenhang mit einem Ausführungsbeispiel anhand von mehreren Figuren näher erläutert. Es zeigen:
- Fig.1:: Draufsicht eines Füllstandmessgeräts aus der VEGAFLEX Serie 60, erweitert um die Möglichkeit, einen Kopfhörer oder Lautsprecher 7 anzuschließen,
- Fig.2:: Draufsicht eines Füllstandmessgeräts aus der VEGAFLEX Serie 60, erweitert um eine Schnittstelle 5 zur drahtlose Übertragung der akustischen Signale, einem Empfangsgerät mit Kopfhörer 7 sowie einer Wiederholungstaste 6,
- Fig.3:: Blockschaltbild eines erfindungsgemäßen Füllstandmessgeräts,
- Fig.4:: Ausschnitt aus dem im Display 2 dargestellten Menü.

In den nachfolgenden Figuren bezeichnen, sofern nicht anders angegeben, gleiche Bezugszeichen gleiche Teile mit gleicher Bedeutung.

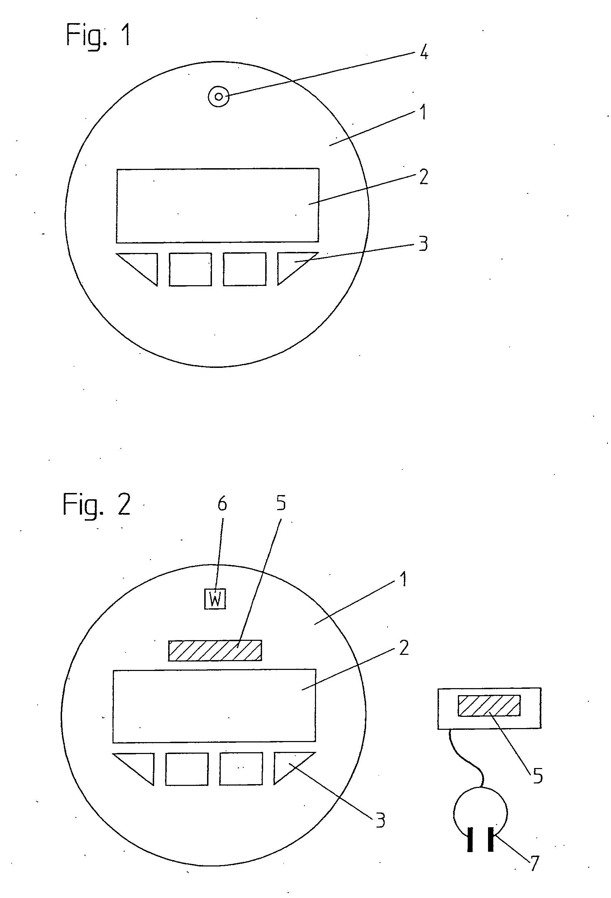

In Fig.1 ist eine Draufsicht eines Füllstandmessgeräts dargestellt. Im beispielsweise kreisrunden Gehäusedeckel 1 des Füllstandmessgeräts befindet sich mittig das Display 2; direkt unterhalb davon befinden sich die Eingabetasten 3. Mit diesen Tasten gibt der Anwender, visuell durch das Display 2 unterstützt, die zur korrekten Funktion des Füllstandmessgeräts notwendigen Informationen ein. Oberhalb des Displays 2 befindet sich eine Buchse 4, an der ein Kopfhörer oder ein Lautsprecher 7 angeschlossen werden kann. Über diesen Kopfhörer bzw. Lautsprecher 7 werden dem Anwender akustische Sprachsignale übermittelt, die es ihm leichter machen, Eingaben über die Eingabetasten 3 zu tätigen.

Fig.2 zeigt eine etwas andere Ausführung des Füllstandmessgeräts, das sich aber im Wesentlichen an der in Fig.1 dargestellten Variante orientiert. Ein Unterschied ist die Erweiterung der Eingabetasten 3 um eine Wiederholungstaste 6, durch deren Betätigung das zuletzt ausgegebene akustische Sprachsignal wiederholt werden kann. Da es u.U. im Einsatzgebiet dieser Füllstandmessgeräte zu erhöhten Geräuschkulissen kommen kann, ist diese Funktion sinnvoll. Ein weiterer Unterschied ist die eingebaute Schnittstelle 5, über die z.B. ein Kopfhörer drahtlos akustische Signale empfangen kann. Für die drahtlose Übertragung von akustischen Signalen kann Infrarot- oder Bluetooth-Technologie eingesetzt werden. Am Kopfhörer 7 befindet sich ein entsprechendes Empfangsteil, das in Fig.2 aus Darstellungsgründen als separate Einheit gezeichnet wurde.

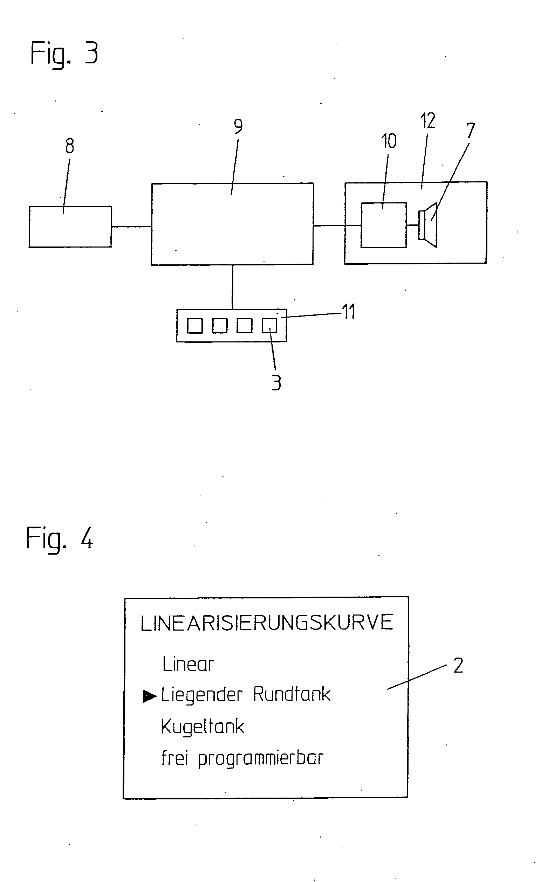

In Fig.3 ist der schematische Aufbau des Füllstandmessgeräts dargestellt. Zentrales Bestandteil ist ein Mikroprozessor 9 als Steuereinheit. Daran angeschlossen ist eine Eingabeeinheit 11 in Form der Eingabetasten 3 und eine Ausgabeeinheit 12 in Form eines Digital-Analog-Wandlers 10 verbunden mit einem Lautsprecher 7. Die Sprachsignale sind in einer Speichereinheit 8 in mehreren Bereichen abgelegt. Durch die Verwendung von mehreren Bereichen ist es möglich, die Sprachsignale in mehreren Landessprachen sowie in unterschiedlichen Ausführlichkeiten auszugeben.

Ist das Füllstandmessgerät auf einem Behälter montiert, dessen Füllstand gemessen werden soll, teilt der Anwender über die Eingabetasten 3 dem Messgerät Informationen mit, die für eine exakte Messung notwendig sind, z.B. welches Füllgut sich im Behälter befindet. Um diese Dateneingabe vorzunehmen, muss der Anwender über ein im Display 2 ersichtliches Menü den richtigen Menüpunkt finden, an dem er seine Eingabe vornehmen kann. Nun erhält der Anwender durch Sprache während der Bedienung Erklärungen zu den im Display 2 angezeigten Menü und/oder der zu vollziehenden Schritte, wie z.B. die möglichen Tastendrucke.

Fig.4 zeigt einen Ausschnitt aus dem im Display 2 ersichtlichen Menü. Gelangt der Anwender zu diesem Punkt, könnte er beispielsweise folgenden gesprochenen Text hören: "Linearisierungskurve ----- Die Linearisierungskurve berechnet aus dem höhenproportionalen Prozentwert einen volumenproportionalen Prozentwert. Wenn ihr 100%-Abgleich mit der Behälteroberkante und der 0%-Abgleich mit der Behälterunterkante übereinstimmt, können sie die vordefinierten Kurven liegender Rundtank oder Kugeltank verwenden. Falls nicht, können sie unter 'frei programmierbar' eine passende Kurve eingeben. ----- Zur Einstellung eines anderen Werts drücken Sie OK."

### Bezugszeichenliste

- 1: Gehäusedeckel
- 2: Display
- 3: Eingabetasten
- 4: Buchse zum Anschluss eines Kopfhörers
- 5: Schnittstelle zur drahtlosen Signalübertragung
- 6: Wiederholungstaste
- 7: Lautsprecher/Kopfhörer
- 8: Speichereinheit
- 9: Steuereinheit (Mikroprozessor)
- 10: D/A-Wandler
- 11: Eingabeeinheit
- 12: Ausgabeeinheit

## Patentansprüche

1. Messgerät, insbesondere zur Füllstand- oder Druckmessung mit einer Steuereinrichtung (9), an die eine Speichereinheit (8), eine Eingabeeinheit (11) sowie eine Ausgabeeinheit (12) angeschlossen ist,
**dadurch gekennzeichnet,**
**dass** die Ausgabeeinheit (12) als akustische Ausgabeeinheit ausgebildet ist, und dass in der Speichereinheit (8) Betriebs- und/oder Bedienungsparameter gespeichert sind, die durch Betätigung der Eingebeeinheit (11) als akustische Sprachsignale von der Ausgabeeinheit (12) ausgebbar sind.

2. Messgerät nach Anspruch 1,
**dadurch gekennzeichnet,**
**dass** die Speichereinheit (8) zumindest zwei Bereiche enthält, worin die akustischen Sprachsignale analog oder digital codiert in jeweils einer Landesprache abgelegt sind.

3. Messgerät nach einem der Ansprüche 1 oder 2,
**dadurch gekennzeichnet,**
**dass** die Ausgabe der akustischen Sprachsignale hinsichtlich der Lautstärke, der Klangfarbe sowie der Tonhöhe veränderbar ist.

4. Messgerät nach einem der Ansprüche 1 bis 3,
**dadurch gekennzeichnet,**
**dass** eine Steckverbindung (4) vorgesehen ist, an die ein Kopfhörer oder ein Lautsprecher anschließbar ist.

5. Messgerät nach einem der Ansprüche 1 bis 3,
**dadurch gekennzeichnet,**
**dass** eine erste Sende- und Empfangseinheit (5) für die drahtlose Übertragung der akustischen Sprachsignale zur Ausgabevorrichtung (12) vorgesehen ist.

6. Messgerät nach einem der Ansprüche 1 bis 5,
**dadurch gekennzeichnet,**
**dass** ein Display (2) vorhanden ist, das zumindest teilweise die Betriebs- und/oder Bedienungsparameter der akustischen Sprachsignale visuell ausgibt.

7. Messgerät nach einem der Ansprüche 1 bis 6,
**dadurch gekennzeichnet,**
**dass** eine Verarbeitungseinheit vorgesehen ist, die gemessene physikalische Größen umrechnet.

8. Messgerät nach einem der Ansprüche 1 bis 7,
**dadurch gekennzeichnet,**
**dass** eine zweite Sende- und Empfangseinheit zur Übermittlung der Messdaten an eine Daten-Sammeleinheit vorgesehen ist.

9. Füllstandmessgerät nach einem der Ansprüche 1 bis 8,
**dadurch gekennzeichnet,**
**dass** im Umfang der Steuereinrichtung eine Taste (6) enthalten ist, bei deren Betätigung die akustischen Sprachsignale nach ihrer Ausgabe wiederholt werden.

10. Messgerät nach einem der Ansprüche 1 bis 9,
**dadurch gekennzeichnet,**
**dass** die Ausführlichkeit der akustischen Sprachsignale zu den Betriebs- und/oder Bedienungsparametern stufenweise wählbar sind.
